# EUROPÄISCHE PATENTSCHRIFT

(11) **EP 2 698 869 B1**
(45) Veröffentlichungstag und Bekanntmachung des Hinweises auf die Patenterteilung: **28.01.2015**
(21) Anmeldenummer: 13003026.5
(22) Anmeldetag: 13.06.2013
(51) Int. Cl.: H01Q 1/22, G01F 23/284, H01Q 1/42, H01Q 15/08, H01Q 19/06, H05K 5/06, H01P 1/08

(54) **Mikrowellenfenster und nach dem Radar-Prinzip arbeitendes Füllstandmesssystem**
Microwave window and fill level measuring device operating according to the radar principle
Fenêtre de micro-ondes et système de mesure du niveau de remplissage fonctionnant selon le principe de radar

(30) Priorität: 15.08.2012 DE 102012016120
(43) Veröffentlichungstag der Anmeldung: 19.02.2014
(73) Patentinhaber: Krohne Messtechnik GmbH, 47058 Duisburg (DE)
(72) Erfinder: Vogt, Michael, 44797 Bochum (DE); Gerding, Michael, 44805 Bochum (DE); Deilmann, Michael, 45257 Essen (DE)
(74) Vertreter: Gesthuysen Patent- und Rechtsanwälte

(56) Entgegenhaltungen:
- US-A- 4 566 321
- US-A- 4 670 754
- NILS POHL ET AL: "A dielectric lens-based antenna concept for high-precision industrial radar measurements at 24GHz", MICROWAVE CONFERENCE (EUMC), 2012 42ND EUROPEAN, IEEE, 29. Oktober 2012 (2012-10-29), Seiten 731-734, XP032328276, ISBN: 978-1-4673-2215-7

## Beschreibung

Die Erfindung betrifft ein Mikrowellenfenster zur räumlichen, druck- und diffusionsdichten Trennung und mikrowellenmäßigen Verbindung eines ersten Raumes von bzw. mit einem zweiten Raum, mit einer zwei einander gegenüberliegende Seiten aufweisenden zumindest teilweise mikrowellendurchlässigen Barriere. Ferner betrifft die Erfindung ein nach dem Radar-Prinzip arbeitendes Füllstandmesssystem mit mindestens einer eine elektromagnetische Strahlung erzeugenden Elektronikkomponente, mit mindestens einer eine elektromagnetische Strahlung abstrahlenden und mindestens eine elektromagnetische Strahlung empfangenden Antenne und mit mindestens einem Mikrowellenfenster.

In der industriellen Messtechnik werden häufig Radarfüllstandmessgeräte eingesetzt, um den Füllstand von Medien wie beispielsweise Flüssigkeiten, Schüttgütern oder auch Schlämmen innerhalb von Behältern wie Tanks oder Silos zu bestimmen. Das durch die Messgeräte umgesetzte Laufzeitverfahren baut dabei auf der physikalischen Gesetzmäßigkeit, dass die Laufstrecke z. B. eines elektromagnetischen Signals gleich dem Produkt aus Laufzeit und Ausbreitungsgeschwindigkeit ist. Im Fall einer Messung des Füllstands eines Mediums - beispielsweise einer Flüssigkeit oder eines Schüttguts - in einem Behälter entspricht die Laufstrecke dem doppelten Abstand zwischen einer das elektromagnetische Signal abstrahlenden und wieder empfangenden Antenne und der Oberfläche des Mediums. Das Nutzechosignal - also das an der Oberfläche des Mediums reflektierte Signal - und dessen Laufzeit werden anhand der sog. Echofunktion bzw. der digitalisierten Hüllkurve bestimmt. Die Hüllkurve repräsentiert die Amplituden der Echosignale als Funktion des Abstandes "Antenne - Oberfläche des Mediums". Ein Wert des Füllstands lässt sich anschließend aus der Differenz zwischen dem bekannten Abstand der Antenne zum Boden des Behälters und dem durch die Messung bestimmten Abstand der Oberfläche des Mediums zur Antenne berechnen. Bei den gesendeten und empfangenen elektromagnetischen Signalen handelt es sich zumeist um Mikrowellenstrahlung.

Je nach der Art des Mediums oder den herrschenden Prozessbedingungen können in den Behältern Unter- oder sehr hohe Überdrücke, sehr niedrige oder sehr hohe Temperaturen herrschen, weiter können die Medien sehr aggressiv und/oder korrosiv sein. Zumeist ist es auch erforderlich, dass die Behälter abgedichtet sind, so dass die Medien nicht in die Umwelt entweichen können. Um solchen generellen und speziell auch für die ggf. empfindlichen Bestandteile der Messgeräte (z. B. die Temperaturempfindlichkeit der Elektronikkomponenten) relevanten Sicherheitsaspekten zu genügen, sind im Stand der Technik die eingangs genannten Mikrowellenfenster bekannt. Solche Fenster bestehen vorzugsweise beim Vorliegen hoher Drücke aus einem Glas oder einer Keramik, z. B. Meta-, Quarz- oder Borsilikatglas oder bei reduzierter erforderlicher Druckfestigkeit aus Kunststoffen wie Polypropylen, Polytetrafluorethen oder Polyetheretherketon (PEEK).

Die DE 195 42 525 C2 beschreibt ein Mikrowellenfenster, das innerhalb eines Hohlwellenleiters angeordnet ist. Solche Hohlwellenleiter dienen im Allgemein der Übertragung der elektromagnetischen Signale zwischen einer die Signale erzeugenden bzw. empfangene Signale verarbeitenden Elektronikkomponente und der die elektromagnetischen Signale abstrahlenden bzw. empfangenden Antenne. Das Mikrowellenfenster bewirkt zum einen eine druck- und diffusionsdichte Trennung zwischen dem Innenraum des Behälters und dem Außenraum und zum anderen eine Übertragung der Mikrowellen zwischen den Räumen.

Von der Elektronikkomponente werden im Allgemeinen elektromagnetische Strahlungen in Form von sphärischen Wellen erzeugt, die für die Füllstandmessung und damit für die Abstrahlung in den Behälter, in dem sich das Medium, dessen Füllstand zu bestimmen ist, befindet, in ebene Wellen umgewandelt werden. Die an der Oberfläche des Mediums reflektierten Wellen werden umgekehrt wieder in sphärische Wellen umgewandelt. Hierfür ist es im Stand der Technik vorgesehen, Linsen zu verwenden (siehe z. B. die WO 2011/110560 A1). In der Offenlegungsschrift DE 44 07 823 A1 wird eine Anordnung beschrieben, in der auf einer die Antenne vom Prozessraum trennenden Platte Lamellen als inhomogene Linse angeordnet sind.

US 4566327 A offenbart ein Füllstandmeßsystem.

Der Erfindung liegt die Aufgabe zugrunde, ein Mikrowellenfenster und ein damit versehenes Füllstandmesssystem vorzuschlagen, die einen zuverlässigen Abschluss eines Prozessraums und eine genaue Messung ermöglichen.

Die aufgezeigte Aufgabe ist erfindungsgemäß zunächst und im Wesentlichen bei dem in Rede stehenden Mikrowellenfenster dadurch gelöst, dass die Barriere scheibenförmig ausgestaltet ist und zumindest teilweise aus einem Glas besteht und dass zudem auf mindestens einer Seite der Barriere mindestens eine dielektrische Linse angeordnet ist, die aus einem im Wesentlichen homogenen Körper und zumindest teilweise aus einem Kunststoff besteht und plankonvex ausgestaltet ist. Wenn davon die rede ist, dass die Barriere scheibenförmig ausgestaltet ist, dann ist damit gemeint, dass die Barriere flachförmig mit zwei im Wesentlichen planparallelen Hauptseitenflächen ausgestattet ist. Der mehrteilige Aufbau hat den Vorteil, dass druckaufnehmende und feldformende Komponenten unabhängig voneinander hergestellt werden können, so dass insgesamt weniger Kompromisse bei Entwurf und Produktion des Mikrowellenfensters eingegangen werden müssen.

Vorzugsweise hat die Barriere im Wesentlichen die Form eines Zylinders mit einer im Wesentlichen kreisförmiger Grundfläche, was bei entsprechender Einfassung und Druckbeaufschlagung zu einer über den Umfang gleichmäßigen mechanischen Belastung führt; dies ist gegenüber einer eckigen oder polygonal berandeten Grundfläche von Vorteil. Neben der druck- und diffusionsdichten Trennung der zwei Räume, d. h. insbesondere der Trennung des Prozessraums von der Umgebung, dient die Barriere zudem meist auch als elektrische Potentialtrennung bzw. der thermischen Trennung. Für die Füllstandmessung ist insbesondere die Barriere derartig ausgestaltet, dass sie eine möglichst geringe Dämpfung der sie passierenden elektromagnetischen Strahlung aufweist. Die Höhe der Barriere ist in einer Ausgestaltung abhängig von der erforderlichen Druckfestigkeit. Handelt es sich bei der Barriere beispielsweise um einen Glaskörper mit einem Durchmesser von ungefähr 45 mm, so beträgt die Höhe bei einer Druckfestigkeit bis zu maximal 40 bar beispielsweise 20 mm und bei einem maximalen Druck von 16 bar 15 mm.

Auf mindestens einer Seite der Barriere befindet sich eine dielektrische - also aus einem dielektrischen Material bestehende - Linse, die aus einem im Wesentlichen homogenen Körper besteht. Zeigt der Stand der Technik beispielsweise Lamellenstrukturen zur Realisierung inhomogener Linsen (siehe z. B. die DE 44 07 823 A1), so wird beim erfindungsgemäßen Mikrowellenfenster die Linse durch einen homogenen, d. h. einen eine gleichmäßige Struktur, die beispielsweise insbesondere über keine Diskontinuitäten oder Lücken wie die Lamellen verfügt, aufweisenden Körper gebildet. Die Linse ist zudem plankonvex ausgestaltet und dafür auf einer Seite plan und der gegenüberliegenden Seite konvex. Die Linse dient generell der Umwandlung von sphärischen Wellen in ebene Wellen und von ebenen Wellen in sphärische Wellen. Vorzugsweise erlaubt die Linse eine Fokussierung der am Medium reflektierten Wellen in die Antenne, so dass die Messgenauigkeit erhöht wird, da Verluste außerhalb des Prozessraums vermieden werden.

Das erfindungsgemäße Mikrowellenfenster ist dabei insgesamt zumindest zweiteilig ausgestaltet, insofern die Barriere und die mindestens eine Linse zwei separate Bauteile sind. Vorzugsweise ist dabei ein Feldwellenwiderstand der Linse in Abhängigkeit von einem Feldwellenwiderstand der Barriere und in Abhängigkeit von einem Feldwellenwiderstand des Raums ausgestaltet, der sich auf der von der Barriere abgewandten Seite der Linse befindet.

Erfindungsgemäß ist vorgesehen, dass die Barriere zumindest teilweise aus einem Glas besteht. Insbesondere handelt es sich bei der Barriere um ein in einen Metallring oder einer anderen metallischen Umrandung (z. B. als Teil eines Flansches) eingeschlossenes oder eingeschmolzenes Glas, das insbesondere als Schauglas ausgeführt ist.

Die Barriere schließt vorzugsweise - unabhängig vom gewählten Material - bündig mit dem umgebenden Element, z. B. dem Flansch ab.

Erfindungsgemäß besteht die mindestens eine Linse zumindest teilweise aus einem Kunststoff. Beispiele für entsprechende Kunststoffe sind: Polyetheretherketon (PEEK), Polytetrafluorethylen (PTFE) oder Polyamide (PA). Die Linse ist dabei insbesondere einstückig homogen ausgeführt.

Die mindestens eine Linse ist in einer Ausgestaltung mit der Barriere verklebt und in einer ergänzenden oder alternativen Ausgestaltung durch mindestens eine Befestigungsvorrichtung relativ zur Barriere verspannt. In einer zusätzlichen Ausgestaltung wird die Verbindung zwischen Linse und Barriere durch eine Verschraubung realisiert.

In einer Ausgestaltung ist zumindest eine Beschichtung vorgesehen, die sich zwischen der mindestens einen Linse und der Barriere befindet oder die auf der von der Barriere abgewandten Seite der mindestens einen Linse angeordnet ist. In einer Ausgestaltung befinden sich auf beiden Seiten der Linse jeweils mindestens eine Beschichtung. Die Beschichtung erhöht dabei beispielsweise die Beständigkeit gegenüber Umwelteinflüssen oder gegenüber Verschmutzungen. In einer alternativen oder ergänzenden Ausgestaltung dient die Beschichtung dazu, dass die an den Grenzschichten des Mikrowellenfensters reflektierten Wellen destruktiv interferieren.

In einer Ausgestaltung befindet sich auf den beiden Seiten der Barriere jeweils mindestens eine Linse. Die Linsen sind dabei gleich oder unterschiedlich und mindestens eine Linse ist nach mindestens einer der obigen Varianten ausgestaltet. In einer Ausgestaltung verfügt die im Prozessraum, d. h. in Richtung des Mediums, dessen Füllstand zu bestimmen ist, befindliche Linse über eine Abtropfspitze.

In einer Ausgestaltung sind die Bemaßungen des Mikrowellenfensters wie folgt: Die Barriere ist druckfest bis im Wesentlichen 40 bar und besteht zumindest teilweise aus einem Borosilikatglas. Die Höhe der Barriere beträgt im Wesentlichen 20 mm bei einem Durchmesser der Grundfläche von im Wesentlichen 45 mm. Die mindestens eine Linse besteht dabei zumindest teilweise aus Peek mit einer Dichte von im Wesentlichen 1,31 g/Kubikzentimeter. Aufgebaut ist der homogene Linsenkörper dabei aus einer scheibenartigen Grundfläche, die der Barriere zugewandt ist und einen Durchmesser von im Wesentlichen 65 mm und eine Höhe von im Wesentlichen 5 mm aufweist, und einem sich an die Grundfläche anschließenden konvexen Abschnitt mit einer Höhe von im Wesentlichen 2,7 mm und einem Radius von im Wesentlichen 95 mm.

Weiterhin wird die zuvor hergeleitete und aufgezeigte Aufgabe in einer weiteren Lehre der Erfindung bei einem eingangs genannten nach dem Radar-Prinzip arbeitenden und ein nach einer der obigen Ausgestaltungen ausgeführten Mikrowellenfenster aufweisenden Füllstandmesssystem dadurch gelöst, dass mindestens ein Gehäuse, das mindestens einen Innenraum aufweist, vorgesehen ist. Dabei ist ein Ende der Antenne in dem Innenraum angeordnet. Der Innenraum ist zumindest zwischen dem Ende der Antenne und dem Mikrowellenfenster frei von Material (also beispielsweise nur mit Luft angefüllt oder evakuiert) und/oder frei von einem eine elektromagnetische Strahlung abschwächenden Material. Weiterhin wird über das Mikrowellenfenster eine in Form von ebenen Wellen vorliegende elektromagnetische Strahlung zumindest teilweise als elektromagnetische Strahlung in Form von sphärischen Wellen in ein Phasenzentrum der Antenne fokussiert. Unter dem Phasenzentrum wird im Allgemeinen der elektronische Referenzpunkt der Antenne verstanden. Vom Empfangsort der die Antenne abstrahlenden Strahlung aus betrachtet scheint die Antennenstrahlung von diesem Zentrum aus auszugehen. Das Mikrowellenfenster oder spezieller: die mindestens eine Linse oder die beiden Linsen in Kombination mit der Barriere fokussieren die an der Oberfläche des Mediums reflektierten Wellen auf die Antenne als sphärische Wellen. Weiterhin dient das Fenster umgekehrt auch der Umwandlung der von der Elektronikkomponente erzeugten elektromagnetischen Wellen in Form von sphärischen Wellen in ebene Wellen. Die Antenne ist dabei beispielsweise als Hornstrahler, Streifenleitungsantenne oder ähnlich ausgestaltet.

Um die Effekte von an den Grenzschichten reflektierten Strahlungen zu reduzieren, ist in einer Ausgestaltung im Innenraum des Gehäuses mindestens ein eine elektromagnetische Strahlung zumindest teilweise absorbierendes Absorberelement vorgesehen. Dabei handelt es sich beispielsweise um einen Schaumabsorber oder um einen elektrisch leitfähigen Kunststoff. In einer alternativen oder ergänzenden Ausgestaltung wirkt das Gehäuse zumindest teilweise als Abschirmung gegenüber einer elektromagnetischen Strahlung bzw. ist in oder an dem Gehäuse eine entsprechende Abschirmung vorgesehen. Ist das Gehäuse insbesondere teilweise elektrisch leitfähig ausgestaltet, so befindet sich zwischen diesem elektrisch leitfähigen Abschnitt des Gehäuses und der Antenne mindestens ein elektrisch isolierendes Element.

In Bezug auf die Ausgestaltung der Antenne ist in einer Variante die mindestens eine Antenne entlang einer Längsachse des Mikrowellenfensters angeordnet. In einer weiteren Ausgestaltung sind mehrere Antennen vorgesehen. Und in einer alternativen oder ergänzenden Variante ist mindestens eine Antenne innerhalb des Gehäuses beweglich ausgestaltet.

In einer Ausgestaltung sind für eine Elektronikkomponente, die eine elektromagnetische Strahlung im Frequenzbereich um 80 GHz erzeugt, folgende Abmessungen vorgesehen: Die mindestens eine Antenne verfügt über mindestens einen einen Innendurchmesser von im Wesentlichen 2,6 mm aufweisenden Rundhohlleiter und ein sich im Wesentlichen konisch aufweitendes Ende. Die Antenne selbst ist dabei im Wesentlichen entlang der Längsachse des Mikrowellenfensters angeordnet. Der Abstand zwischen der Seite der Barriere, die der Antenne zugewandt ist, und dem Ende des Rundhohlleiters, an das das sich im Wesentlichen konisch aufweitende Ende anschließt, beträgt im Wesentlichen 50 mm. Das sich im Wesentlichen konisch aufweitende Ende weitet sich von einem Durchmesser von im Wesentlichen 2,6 mm auf einer Länge von 3 mm auf einen Durchmesser von im Wesentlichen 4,8 mm auf.

Im Einzelnen gibt es eine Vielzahl von Möglichkeiten, das erfindungsgemäße Mikrowellenfenster und das erfindungsgemäße Füllstandmessgerät auszugestalten und weiterzubilden. Dazu wird verwiesen einerseits auf die den Patentansprüchen 1 bzw. 7 nachgeordneten Patentansprüche, andererseits auf die folgende Beschreibung von Ausführungsbeispielen in Verbindung mit der Zeichnung. In der Zeichnung zeigen
- Fig. 1: eine schematische und nicht maßstäbliche Darstellung einer Füllstandmessung mit einem erfindungsgemäßen Füllstandmesssystem,
- Fig. 2: ein Schnitt durch einen nicht maßstabsgerechten Teil der Anordnung der Fig. 1 und
- Fig. 3: einen Teil einer zur Variante der Fign. 1 und 2 alternativen Ausgestaltung eines Füllstandmesssystems.

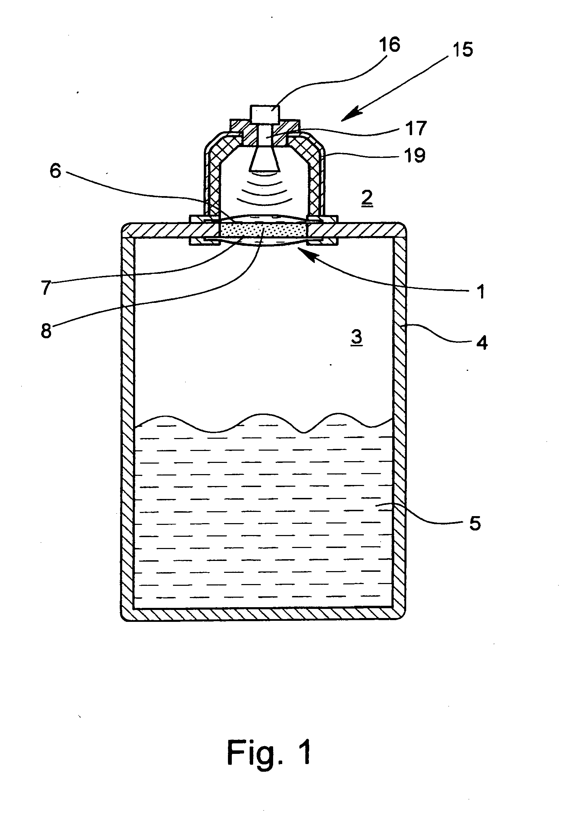

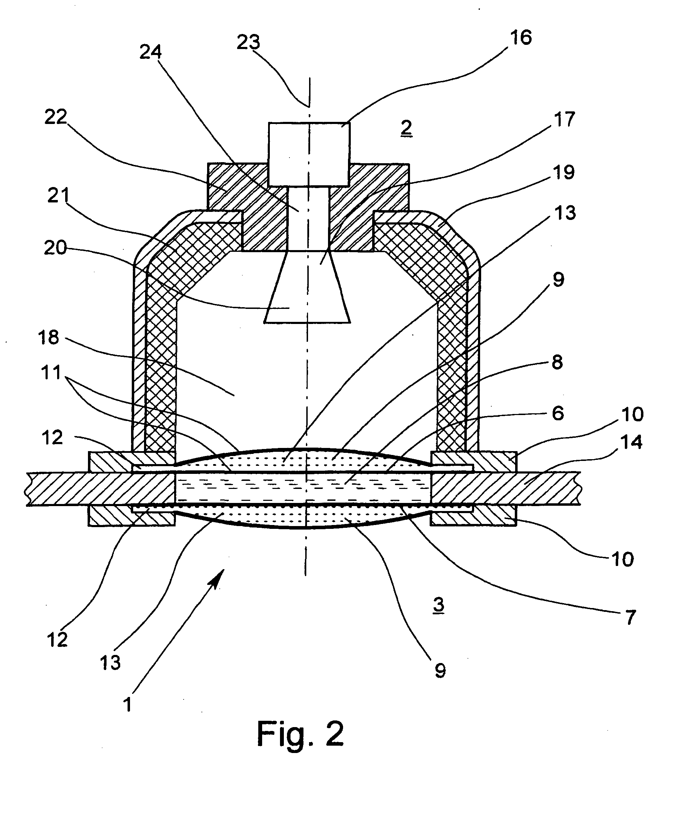

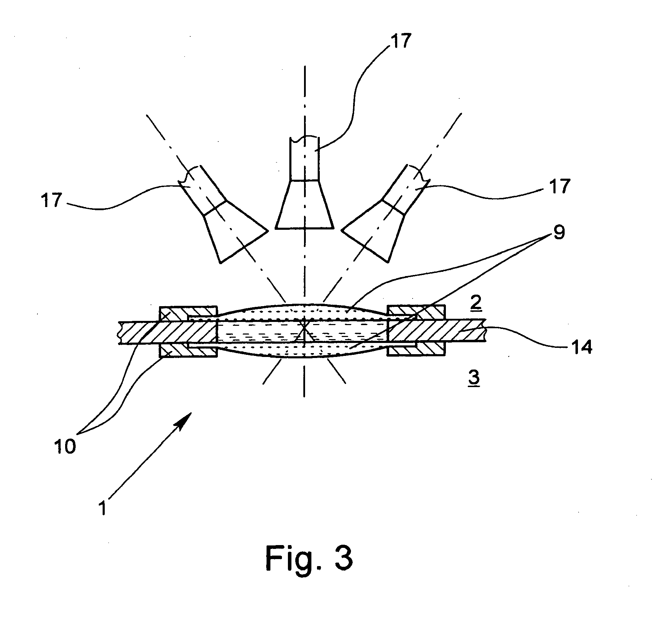

In der Fig. 1 ist eine Messanordnung schematisch dargestellt. Ein Schnitt durch einen Teil der Anordnung zeigt die Fig. 2. In der Fig. 3 ist ein Teil einer alternativen Ausgestaltung der Messanordnung dargestellt.

Die Fig. 1 zeigt, wie ein erfindungsgemäßes Mikrowellenfenster 1 zwischen einem ersten Raum 2 und einem zweiten Raum 3 angeordnet ist. Der zweite Raum 3 ist dabei der Innenraum, der von einem Behälter 4 umfasst wird und in dem sich ein Medium 5 befindet. Der erste Raum 2 ist die Umwelt um den Behälter 4 herum. Das Mikrowellenfenster 1 weist zwei Seiten 6, 7 auf, wobei eine Seite 6 dem ersten Raum 2, d. h. hier der Umwelt, und die andere Seite 7 dem Innenraum des Behälters 4, also dem zweiten Raum 3 zugewandt ist.

Der Durchgang für die für die Messung des Füllstands des Mediums 5 verwendeten Mikrowellen, d. h. des Messsignals, wird durch die Barriere 8 geschaffen, die aus einem Glas besteht und durchlässig für Mikrowellen ist. Das Mikrowellenfenster 1 ist Teil des Füllstandmesssystems 15 mit dem komplett außerhalb des Behälters 4 angeordneten eigentlichen Messgerät, das hier dargestellt ist mit einer Elektronikkomponente 16, einer Antenne 17 und einem Gehäuse 19. Das Füllstandmesssystem 15 besteht daher insgesamt aus einer separaten Messapparatur und dem Fenster 1, das in den Behälter 4 eingebracht ist. Die von der Antenne 17 als Messsignal abgestrahlte elektromagnetische Strahlung, bei der es sich insbesondere um Mikrowellen handelt, gelangt durch das Mikrowellenfenster 1 in den zweiten Raum 3 im Behälter 4. Die an der Oberfläche des Mediums 5 reflektierten Mikrowellensignal treten umgekehrt wieder durch das Mikrowellenfenster 1 in den ersten, den Behälter 4 umgebenden Raum 2 hinaus, um von der Antenne 17 empfangen und von der Elektronikkomponente 16 ausgewertet oder weiterverarbeitet zu werden.

In der Fig. 2 ist ein Schnitt durch ein schematisches Mikrowellenfenster 1 und das damit verbundene Messsystem dargestellt. Das Fenster 1 trennt den ersten Raum 2 als Umwelt von dem zweiten Raum 3 als Prozessraum voneinander und erlaubt dabei gleichzeitig die Passage von Mikrowellen zur Füllstandmessung. Auf der dem Außenbereich zugewandten Seite 6 und auf der dem Innenraum des Behälters zugewandten Seite 7 der Barriere 8 befindet sich in dieser Ausgestaltung jeweils eine Linse 9. Beide Linsen 9 sind dabei jeweils als homogene Körper ausgestaltet und über eine Befestigungsvorrichtung 10 gegenüber der Barriere 8 verspannt. Zwischen den hier plankonvexen Linsen 9 und der Barriere 8 und jeweils auf der von der Barriere 8 abgewandten Seite der Linsen 9 befindet sich jeweils eine Beschichtung 11. Die Linsen 9 verfügen jeweils über zwei Bereiche. Direkt an die Barriere 8 grenzt jeweils eine runde Grundfläche 12 an, an der sich der eigentliche konvexe Abschnitt 13 der Linse anschließt.

Die Barriere 8 ist insbesondere als in der metallischen Berandung des Flansches 14 eingeschmolzenes Glas ausgestaltet.

Außerhalb des Behälters und in der Zeichnung oberhalb des Fensters 1 befindet sich die Elektronikkomponente 16 für die Erzeugung und Verarbeitung der zu sendenden bzw. zu empfangenden elektromagnetischen Strahlung. Die Abstrahlung bzw. der Empfang erfolgt dabei über eine Antenne 17, von der sich ein Ende 20, das sich insbesondere konisch erweitert, im Innenraum 18 des oberhalb des Fensters 1 angeordneten Gehäuses 19 befindet. An der Innenwand des Gehäuses 19 ist ein Absorberelement 21 vorgesehen, das beispielsweise an den Grenzschichten des Fensters 1 reflektierte oder nicht optimal fokussierte elektromagnetische Strahlung zumindest teilweise absorbiert. Hierdurch wird insbesondere das sog. Antennenklingeln reduziert, das sich aus störenden Signalen in Folge von Reflexionen an der Barriere 8 oder an der Antenne 17 ergibt.

Das Gehäuse 19 ist hier zur Abschirmung gegenüber elektromagnetischer Strahlung elektrisch leitend ausgestaltet. Daher befindet sich zwischen dem Gehäuse 19 und der Antenne 17 ein elektrisch isolierendes Element 22.

Insgesamt ist die Antenne 17 entlang der Längsachse 23 des Fensters 1 angeordnet. Insbesondere die Längsachse des Rundhohlleiters 24 ist als dominierender Teil der Antenne 17 entlang dieser Längsachse 23 ausgerichtet.

Zu erkennen ist, dass das Gehäuse 19 mit den damit verbundenen Komponenten auf der Wand des Behälters ruht und daher auch vom Fenster 1 entfernbar ist, ohne dass der Prozessraum geöffnet werden muss. Dadurch kann eine Montage der Instrumentierung, ein möglicher Austausch, eine Ausrichtung der Antenne 17 usw. erfolgen, ohne dass der Prozessraum geöffnet werden muss.

In der Fig. 3 ist eine Variante dargestellt, in der drei Antennen 17 vorgesehen sind. Die Längsachsen der jeweiligen Rundhohlleiter 24 sind jeweils eingezeichnet, so dass zu erkennen ist, dass diese jeweils durch den gleichen Punkt im Mikrowellenfenster 1 verlaufen. In einer weiteren - nicht dargestellten - Ausgestaltung ist mindestens eine Antenne innerhalb des Gehäuses beweglich, insbesondere verschwenkbar ausgestaltet.

## Patentansprüche

1. Mikrowellenfenster (1) zur räumlichen, druck- und diffusionsdichten Trennung und mikrowellenmäßigen Verbindung eines ersten Raumes (2) von bzw. mit einem zweiten Raum (3), mit einer zwei einander gegenüberliegende Seiten (6, 7) aufweisenden zumindest teilweise mikrowellendurchlässigen Barriere (8), wobei auf mindestens einer Seite (6, 7) der Barriere (8) mindestens eine aus einem im Wesentlichen homogenen Körper und zumindest teilweise aus einem Kunststoff bestehende plankonvexe dielektrische Linse (9) angeordnet ist,
**dadurch gekennzeichnet,**
**dass** die Barriere (8) scheibenförmig ausgestaltet ist und zumindest teilweise aus einem Glas besteht.

2. Mikrowellenfenster (1) nach Anspruch 1, **dadurch gekennzeichnet, dass** die scheibenförmige Barriere (8) im Wesentlichen in Form eines Zylinders mit einer im Wesentlichen kreisförmiger Grundfläche ausgestaltet ist.

3. Mikrowellenfenster (1) nach Anspruch 1 oder 2, **dadurch gekennzeichnet, dass** die mindestens eine Linse (9) zumindest teilweise aus PEEK, PTFE oder PA besteht.

4. Mikrowellenfenster (1) nach einem der Ansprüche 1 bis 3, **dadurch gekennzeichnet, dass** die mindestens eine Linse (9) durch mindestens eine Befestigungsvorrichtung (10) relativ zur Barriere (8) verspannt ist.

5. Mikrowellenfenster (1) nach einem der Ansprüche 1 bis 4, **dadurch gekennzeichnet, dass** zwischen der mindestens einen Linse (9) und der Barriere (8) mindestens eine Beschichtung (11) angeordnet ist.

6. Mikrowellenfenster (1) nach einem der Ansprüche 1 bis 5, **dadurch gekennzeichnet, dass** auf jeder der zwei Seiten (6, 7) der Barriere (8) mindestens eine Linse (9) angeordnet ist.

7. Mikrowellenfenster (1) nach einem der Ansprüche 1 bis 6, **dadurch gekennzeichnet, dass** die bis zu einem Druck von im Wesentlichen 40 bar feste Barriere (8) zumindest teilweise aus einem Borosilikatglas besteht, dass eine Höhe der Barriere (8) im Wesentlichen 20 mm und ein Durchmesser der Grundfläche im Wesentlichen 45 mm beträgt, dass die mindestens eine Linse (9) zumindest teilweise aus Peek mit einer Dichte von im Wesentlichen 1,31 g/Kubikzentimeter besteht, dass die mindestens eine Linse (9) eine scheibenartige der Barriere (8) zugewandte Grundfläche (12) mit einem Durchmesser von im Wesentlichen 65 mm und einer Höhe von im Wesentlichen 5 mm aufweist und dass die Linse (9) einen sich an der Grundfläche (12) anschließenden konvexen Abschnitt (13) mit einer Höhe von im Wesentlichen 2,7 mm und einem Radius von im Wesentlichen 95 mm aufweist.

8. Nach dem Radar-Prinzip arbeitendes Füllstandmesssystem (15), mit mindestens einer eine elektromagnetische Strahlung erzeugenden Elektronikkomponente (16), mit mindestens einer eine elektromagnetische Strahlung abstrahlenden und mindestens eine elektromagnetische Strahlung empfangenden Antenne (17) und mit mindestens einem Mikrowellenfenster (1) nach einem der Ansprüche 1 bis 6,
**dadurch gekennzeichnet,**
**dass** mindestens ein mindestens einen Innenraum (18) aufweisendes Gehäuse (19) vorgesehen ist, dass ein Ende (20) der Antenne (17) in dem Innenraum (18) angeordnet ist, dass der Innenraum (18) zumindest zwischen dem Ende (20) der Antenne (17) und dem Mikrowellenfenster (1) frei von Material und/oder frei von einem eine elektromagnetische Strahlung abschwächenden Material ist, und dass das Mikrowellenfenster (1) eine in Form von ebenen Wellen vorliegende elektromagnetische Strahlung zumindest teilweise als elektromagnetische Strahlung in Form von sphärischen Wellen in ein Phasenzentrum der Antenne (17) fokussiert.

9. Füllstandmesssystem (15) nach Anspruch 8, **dadurch gekennzeichnet, dass** in dem Innenraum (18) mindestens ein eine elektromagnetische Strahlung zumindest teilweise absorbierendes Absorberelement (21) vorgesehen ist, und/oder dass das Gehäuse (19) zumindest teilweise als eine Abschirmung gegenüber einer elektromagnetischer Strahlung wirkt und/oder eine Abschirmung gegenüber einer elektromagnetischer Strahlung aufweist, und/oder dass zwischen einem elektrisch leitfähig ausgestalteten Abschnitt des Gehäuses (19) und der Antenne (17) mindestens ein elektrisch isolierendes Element (22) angeordnet ist.

10. Füllstandmesssystem (15) nach Anspruch 8 oder 9, **dadurch gekennzeichnet, dass** die mindestens eine Antenne (17) entlang einer Längsachse (23) des Mikrowellenfensters (1) angeordnet ist und/oder dass mehr als eine Antenne (17) vorgesehen ist und/oder dass mindestens eine Antenne (17) innerhalb des Gehäuses (19) beweglich ausgestaltet ist.

11. Füllstandmesssystem (15) nach Anspruch 9, **dadurch gekennzeichnet, dass** die Elektronikkomponente (16) eine elektromagnetische Strahlung im Frequenzbereich um 80 GHz erzeugt, dass mindestens eine Antenne (17) mindestens einen einen Innendurchmesser von im Wesentlichen 2,6 mm aufweisenden Rundhohlleiter (24) und ein sich im Wesentlichen konisch aufweitendes Ende (20) aufweist, wobei die Antenne (17) im Wesentlichen entlang der Längsachse (23) des Mikrowellenfensters (1) angeordnet ist, wobei der Abstand zwischen der der Antenne (17) zugewandten Seite (6) der Barriere (8) und dem dem sich im Wesentlichen konisch aufweitenden Ende (20) zugewandten Ende des Rundhohlleiters (24) im Wesentlichen 50 mm beträgt, und wobei das sich im Wesentlichen konisch aufweitende Ende (20) sich von einem Durchmesser von im Wesentlichen 2,6 mm auf einer Länge von 3 mm auf einen Durchmesser von im Wesentlichen 4,8 mm aufweitet.

## Claims

1. Microwave window (1) for the spatial, pressure-impervious and diffusion-impervious separation and microwave connection of a first space (2) from/to a second space (3), with a barrier (8) that has two opposite sides (6, 7) and is at least partially permeable to microwaves, wherein at least one dielectric lens (9), which is comprised of an essentially homogenous body and is plano-convex, is arranged on at least one side (6, 7) of the barrier (8),
**characterized in**
**that** the barrier (8) is configured in the shape of a disk and is at least partially composed of a glass.

2. Microwave window (1) according to Claim 1, **characterized in that** the discoid barrier (8) is essentially configured in the form of a cylinder with an essentially circular base.

3. Microwave window (1) according to Claim 1 or 2, **characterized in that** the at least one lens (9) is at least partially composed of a plastic - especially PEEK, PTFE, or PA.

4. Microwave window (1) according to one of the Claims 1 to 3, **characterized in that** the at least one lens (9) is clamped relative to the barrier (8) by at least one anchoring device (10).

5. Microwave window (1) according to one of the Claims 1 to 4, **characterized in that** at least one coating (11) is arranged between the at least one lens (9) and the barrier (8).

6. Microwave window (1) according to one of the Claims 1 to 5, **characterized in that** one lens (9) is arranged on each of the two sides (6, 7) of the barrier (8).

7. Microwave window (1) according to one of the Claims 1 to 6, **characterized in that** the barrier (8), which is stable up to a pressure of essentially 40 bar, is at least partially composed of a borosilicate glass; that the height of the barrier (8) is essentially 20 mm and the diameter of the base is essentially 45 mm; that the at least one lens (9) is at least partially composed of Peek and has a density of essentially 1.31 g/cubic centimeter; that the at least one lens (9) has a disk-like base (12) that faces the barrier (8), a diameter of essentially 65 mm and a height of essentially 5 mm; and that the lens (9) has a convex section (13) which connects to the base (12) and has a height of essentially 2.7 mm and a radius of essentially 95 mm.

8. A level-measuring system (15) that operates according to the radar principle, with at least one electronic component (16) that generates electromagnetic radiation, at least one antenna (17) that radiates an electromagnetic radiation and receives at least one electromagnetic radiation, and at least one microwave window (1) according to one of the Claims 1 to 6,
**characterized in**
**that** at least one housing (19) that has at least one internal space (18) is provided; that one end (20) of the antenna (17) is arranged in the internal space (18); that the internal space (18) is free of material and/or free of a material that attenuates electromagnetic radiation, at least between the end (20) of the antenna (17) and the microwave window (1); and that the microwave window (1) focuses an electromagnetic radiation present in the form of plane waves at least partially as an electromagnetic radiation in the form of spherical waves into a phase center of the antenna (17).

9. Level-measuring system (15) according to Claim 8, **characterized in that** at least one absorber element (21), which at least partially absorbs electromagnetic radiation, is provided in the internal space (18), and/or that the housing (19) functions at least partially as shielding against electromagnetic radiation and/or has shielding against electromagnetic radiation, and/or that at least one electrically insulating element (22) is located between an electrically conductive section of the housing (19) and the antenna (17).

10. Level-measuring system (15) according to Claim 8 or 9, **characterized in that** at least one antenna (17) is arranged along a longitudinal axis (23) of the microwave window (1), and/or that more than one antenna (17) is provided and/or that least one antenna (17) inside of the housing (19) is designed to be movable.

11. Level-measuring system (15) according to Claim 9, **characterized in that** the electronic component (16) generates an electromagnetic radiation in the frequency range of 80 GHz; that at least one antenna (17) has a circular waveguide (24) that has an inner radius of essentially 2.6 mm and an end (20) that is essentially conically widening, whereby the antenna (17) is essentially arranged along the longitudinal axis (23) of the microwave window (1), whereby the gap between the side (6) of the barrier (8) that faces the antenna (17) and the end of the circular waveguide (24) that faces the essentially conically widening end (20) is essentially 50 mm, and whereby the essentially conically widening end (20) widens from a diameter of essentially 2.6 mm over a length of 3 mm to a diameter of essentially 4.8 mm.

## Revendications

1. Fenêtre (1) à microondes permettant de séparer spatialement de manière étanche à la pression et à la diffusion et à relier en termes de microondes un premier espace (2) vis-à-vis d'un deuxième espace (3),
la fenêtre présentant une barrière (8) qui est au moins partiellement transparente vis-à-vis des microondes et qui présente deux faces (6, 7) mutuellement opposées,
au moins une lentille diélectrique plan-convexe (9) formée d'un corps essentiellement homogène et réalisé au moins en partie en matière synthétique étant disposée sur au moins une face (6, 7) de la barrière (8),
**caractérisée en ce que**
la barrière (8) est configurée en forme de plaque et est constituée au moins en partie d'un verre.

2. Fenêtre (1) à microondes selon la revendication 1, **caractérisée en ce que** la barrière (8) en forme de plaque présente essentiellement la forme d'un cylindre dont la surface de base est essentiellement circulaire.

3. Fenêtre (1) à microondes selon les revendications 1 ou 2, **caractérisée en ce que** la ou les lentilles (9) sont réalisées au moins en partie en PEEK, PTFE ou PA.

4. Fenêtre (1) à microondes selon l'une des revendications 1 à 3, **caractérisée en ce que** la ou les lentilles (9) sont serrées par rapport à la barrière (8) par au moins un dispositif de fixation (10).

5. Fenêtre (1) à microondes selon l'une des revendications 1 à 4, **caractérisée en ce qu'**au moins un revêtement (11) est disposé entre la ou les lentilles (9) et la barrière (8).

6. Fenêtre (1) à microondes selon l'une des revendications 1 à 5, **caractérisée en ce qu'**au moins une lentille (9) est disposée sur chacune des deux faces (6, 7) de la barrière (8).

7. Fenêtre (1) à microondes selon l'une des revendications 1 à 6, **caractérisée en ce que** la barrière (8) qui résiste à une pression d'essentiellement 40 bars est constituée au moins en partie d'un verre au borosilicate, **en ce que** la hauteur de la barrière (8) est d'au moins 20 mm et le diamètre de la surface de base est d'au moins 45 mm, **en ce que** la ou les lentilles (9) sont constituées au moins en partie de PEEK d'une masse spécifique essentiellement de 1,31 g/centimètre cube, **en ce que** la ou les lentilles (9) présentent une surface de base (12) en forme de plaque tournée vers la barrière (8) et dont le diamètre est essentiellement de 65 mm et la hauteur essentiellement de 5 mm et **en ce que** la lentille (9) présente une partie convexe (13) adjacente à la surface de base (12) et dont la hauteur est essentiellement de 2,7 mm et le rayon essentiellement de 95 mm.

8. Système (15) de mesure de niveau travaillant selon le principe du radar et présentant
au moins un composant électronique (16) formant un rayonnement électromagnétique, au moins une antenne (17) qui émet un rayonnement électromagnétique et au moins une antenne (17) qui reçoit un rayonnement électromagnétique et au moins une fenêtre (1) à microondes selon l'une des revendications 1 à 6, **caractérisé en ce que**
au moins un boîtier (19) présentant au moins un espace intérieur (18) est prévu,
**en ce qu'**une extrémité (20) de l'antenne (17) est disposée dans l'espace intérieur (18),
**en ce que** l'espace intérieur (18) est dépourvu de matériau et/ou dépourvu d'un matériau atténuant le rayonnement électromagnétique au moins entre l'extrémité (20) de l'antenne (17) et la fenêtre (1) à microondes et
**en ce que** la fenêtre (1) à microondes concentre un rayonnement électromagnétique présentant la forme d'ondes planes au moins en partie en rayonnement électromagnétique présentant la forme d'ondes sphériques au centre de phase de l'antenne (17).

9. Système (15) de mesure de niveau selon la revendication 8, **caractérisé en ce qu'**au moins un élément absorbeur (21) qui absorbe au moins en partie le rayonnement électromagnétique est prévu dans l'espace intérieur (18), et/ou **en ce que** le boîtier (19) agit au moins en partie comme blindage vis-à-vis du rayonnement électromagnétique et/ou présente un blindage vis-à-vis d'un rayonnement électromagnétique et/ou **en ce qu'**au moins un élément électriquement isolant (22) est disposé entre une partie électriquement conductrice du boîtier (19) et l'antenne (17).

10. Système (15) de mesure de niveau selon les revendications 8 ou 9, **caractérisé en ce que** la ou les antennes (17) sont disposées le long d'un axe longitudinal (23) de la fenêtre (1) à microondes et/ou en ce que plus d'une antenne (17) sont prévues et/ou **en ce qu'**au moins une antenne (17) est configurée de manière à pouvoir se déplacer à l'intérieur du boîtier (19).

11. Système (15) de mesure de niveau selon la revendication 9, **caractérisé en ce que** le composant électronique (16) forme un rayonnement électromagnétique dans la plage de fréquence qui entoure 80 GHz, **en ce qu'**au moins une antenne (17) présente au moins un conducteur creux circulaire (24) présentant un diamètre intérieur essentiellement de 2,6 mm et une extrémité (20) qui s'évase essentiellement en cône, l'antenne (17) étant disposée le long de l'axe longitudinal (23) de la fenêtre (1) à microondes, la distance entre la face (6) de la barrière (8) tournée vers l'antenne (17) et l'extrémité du conducteur creux circulaire (24) tournée vers l'extrémité (20) qui s'évase essentiellement en cône étant 50 mm, et l'extrémité (20) qui s'évase essentiellement en cône s'évasant depuis un diamètre essentiellement de 2,6 mm à un diamètre essentiellement de 4,8 mm sur une longueur de 3 mm.
